# EUROPEAN PATENT SPECIFICATION

(11) **EP 3 112 055 B1**
(45) Date of publication and mention of the grant of the patent: **02.12.2020**
(21) Application number: 15174834.0
(22) Date of filing: 01.07.2015
(51) Int. Cl.: B22F 3/105, B22F 1/00, B22F 7/06, B33Y 10/00, B33Y 30/00, B23K 103/16

(54) **METHOD FOR MANUFACTURING A METAL PART WITH BI-METALLIC CHARACTERISTIC**
VERFAHREN ZUR HERSTELLUNG EINES METALLTEILS MIT BIMETALLISCHER CHARAKTERISTIK
PROCÉDÉ DE FABRICATION D'UNE PIÈCE MÉTALLIQUE AVEC UNE CARACTÉRISTIQUE BIMÉTALLIQUE

(43) Date of publication of application: 04.01.2017
(73) Proprietor: Ansaldo Energia IP UK Limited, London W1G 9DQ (GB)
(72) Inventor: Steiner, Harald, 5405 Baden (CH)
(74) Representative: Bernotti, Andrea

(56) References cited:
- WO-A1-2014/188778
- WO-A1-2015/094720
- US-A1- 2015 021 379
- US-A1- 2015 044 084

## Description

### BACKGROUND OF THE INVENTION

The present invention relates to the manufacturing of metal parts. It refers to a method for manufacturing a metal part with bi-metallic characteristic.

### PRIOR ART

In thermal turbo machines, especially steam or gas turbines, high thermomechanical stresses occur in exposed metal parts or components, which result in low cyclic lifetime of the parts. Furthermore, large deformations occur due to different thermal expansion coefficients or temperature gradients. Also, at small contact areas high contact forces exist and lead to a high wear rate. Finally, large gaps result in chattering, large wear and cracks.

To tackle these problems, welding of parts of dissimilar material may be considered. However, a sharp change-over of different materials leads to additional stresses at elevated temperatures in the heat affected zone (HAZ) of the respective weld seams.

In the prior art, document WO 2014/202352 A1 discloses a method for producing a three-dimensional article or at least a part of such an article made of a gamma prime ([gamma]') precipitation hardened nickel base super alloy with a high volume fraction (>25 %) of gamma-prima phase which is a difficult to weld super alloy, or made of a cobalt base super alloy, or of a non-castable or difficult to machine metal material by means of selective laser melting (SLM), in which the article is produced by melting of layerwise deposited metal powder with a laser beam. The SLM processing parameters are selectively adjusted to locally tailor the microstructure and/or porosity of the produced article or a part of the article and therefore to optimize desired properties of the finalized article/part of the article.

On the other hand, document DE 10 2013 210 876 B4 discloses a composite component for thermal control gap in fluid-flow machines as well as a fluid machine with such a composite component that enables a gap control optimally adapted to the application conditions. The composite component comprises a first and second mcomposite component may be manufactured by means of selective laser melting (SLM).

The known methods are either not suitable for the manufacturing of bi-metallic metal parts (WO 2014/202352 A1) or still comprise disadvantageous sharp transitions between two different metals of the part.

Documents US 2015/044084 A1, WO 2015/094720 A1. WO 2014/188778 A1 and US 2015/021379 A1 are further prior art documents known in the technical field.

### SUMMARY OF THE INVENTION

It is an object of the present invention to teach a method for manufacturing a metal part with bi-metallic characteristic, which allows improving and tailoring the thermo-mechanic properties of the part.

This and other objects are obtained by a manufacturing method according to Claim 1. The method according to the invention for manufacturing a metal part with bi-metallic characteristic in an additive manufacturing (AM) process comprises the steps of:
a) providing a first powder of a metal with a first thermal expansion coefficient;
b) providing a second powder of a metal with a second thermal expansion coefficient different from said first thermal expansion coefficient;
c) manufacturing a first pure metal layer by successively melting layers of said first powder alone;
d) manufacturing on said first pure metal layer a mixed layer by successively melting layers of a third powder being a mixture of said first and second powders, whereby the percentage of said first powder decreases from 100% to 0% with increasing thickness of said mixed layer, and whereby the percentage of said second powder increases at the same time from 0% to 100%; and
e) manufacturing a second pure metal layer by successively melting layers of said second powder alone; wherein the metal with the larger thermal expansion coefficient is used for a colder side of the metal part and the metal with the lower thermal expansion is used for a hotter side of the metal part, wherein the intended deformation in a hot state of the metal part defines the change point from one powder to the other, and wherein the intended deformation in the hot state is optimized to be zero with minimal deviation from the design geometry, or a certain intended deformation is generated to optimize contact pressure and wear.

According to an embodiment of the invention said mixture of said first and second powders is produced by taking a first quantity of said first powder from a first powder reservoir and a second quantity of said second powder from a second powder reservoir and mixing said first and second quantities in a mixer, whereby said first and second quantities are chosen to generate a new powder layer with a predetermined mixing ratio, and that said mixture of said first and second powders is used in step (d) to manufacture said mixed layer.

Specifically, said mixture of said first and second powders is put as a powder layer of the incomplete metal part by means of a powder layer generating device.

According to another embodiment of the invention said melting is done by using a selective laser melting (SLM) process.

### BRIEF DESCRIPTION OF THE DRAWINGS

The present invention is now to be explained more closely by means of different embodiments and with reference to the attached drawings.
- Fig. 1: shows an example of a bi-metallic metal part manufactured by the method according to the invention, whereby (a) shows a cross-section and (b) shows the respective concentration curves for both metals involved;
- Fig. 2: shows an embodiment of a manufacturing arrangement according to the invention;
- Fig. 3: shows the thermal expansion for various metals, which may be used in the present invention; and
- Fig. 4: shows the welding of dissimilar materials with an intermediate bi-metallic part as shown in Fig. 1.

### DETAILED DESCRIPTION OF DIFFERENT EMBODIMENTS OF THE INVENTION

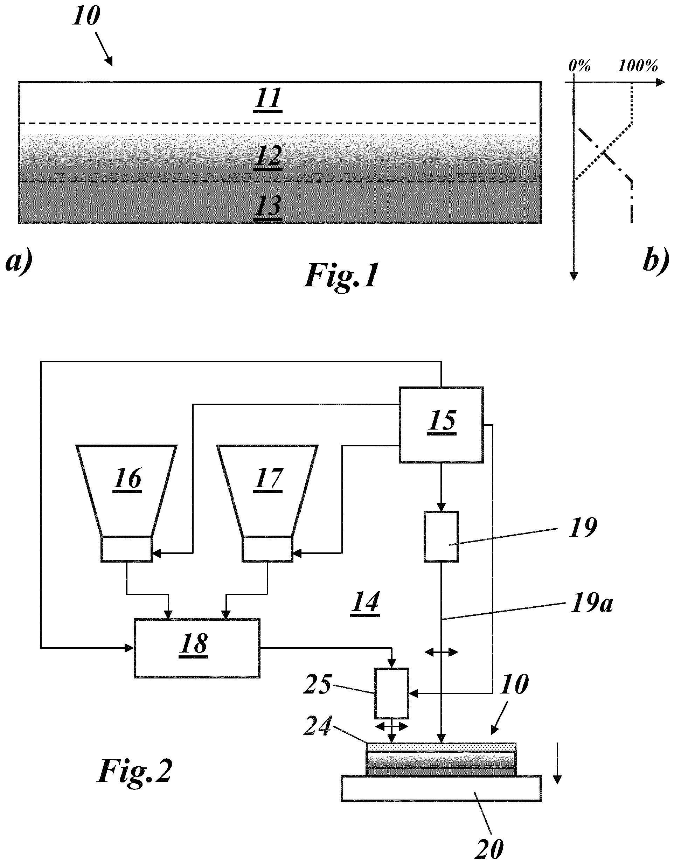

Fig. 1 shows a (simple) example of a bi-metallic metal part 10 manufactured by the method according to the invention, whereby (a) shows a cross-section of metal part 10, and (b) shows the respective concentration curves for both metals involved. Metal part 10 comprises at an upper and at a lower surface two pure layers 11 and 13, whereby pure layer 11 consists 100% of a first metal material, while pure layer 13 consists a 100% of a second metal material. Sandwiched between pure layers 11 and 13 is a mixed layer 12, wherein the concentration of the first metal gradually changes from 100% to 0% (dotted curve in Fig. 1(b)), and the concentration of the second metal gradually changes in opposite direction from 0% to 100% (dot and dash curve in Fig. 1(b)).

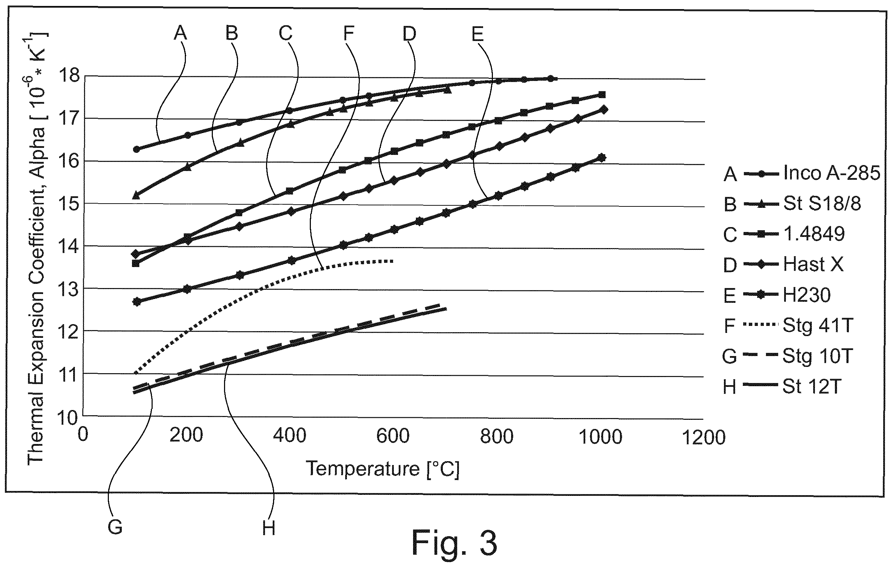

Bi-metallic metal part 10 can be manufactured form respective metal powders by selective laser melting (SLM). Fig. 2 shows as an embodiment of the invention a simplified scheme of a manufacturing arrangement, which may be used to produce a metal part 10 as shown in Fig. 1. Manufacturing arrangement 14 of Fig. 2 comprises two powder reservoirs 16 and 17, which are filled with powders of two metals with different thermal expansion behavior (see for example the thermal expansion curves of various suitable metals in Fig. 3). Each of the reservoirs has an outlet, through which a predetermined quantity of powder can be released to a common mixer 18. The quantities of powder being released are controlled by a control 15, which also controls operation of mixer 18.

The mixed powder or powder mix is then transferred from mixer 18 to a powder layer generating device 25, which generates, controlled by control 15, on a support 20 (or the incomplete metal part 10) a powder layer 24 of suitable thickness. When powder layer 24 is completed, the powder is melted by using an SLM laser source 19 with its laser beam 19a. The control of SLM laser source 19 is also done by control 15.

For manufacturing pure layer 13, pure second metal powder is used. Then, during the SLM process the powder is changed from pure second powder to a successively changing mixture of second and first metal powders (mixed layer 12 in Fig. 1), and finally to pure first metal powder (pure layer 11 in Fig. 1). As explained above, this can be achieved by having the two reservoirs 16 and 17 (with the two different powders) above mixer 18 and the powder layer generating device that puts the powder in layers on the incomplete work piece.

Before a new powder layer 24 is put on the work piece or metal part 10, the powders are filled in the mixer 18 in a variable ratio. As has been said, both powders have a different thermal expansion coefficient. The result is a metal part that consists at one side 100% of one material and on the other side 100% of the other material. In between the material change is gradually (Fig. 1).

In practice, the metal with the larger thermal expansion coefficient (e.g. Hast-X, curve D in Fig. 3, or STS18/8, curve B in Fig. 3) is used for the colder side of the part and the metal with the lower thermal expansion (e.g. Haynes H230, curve E in Fig. 3) is used for the hotter side of the part. The intended deformation in the hot state defines the change point from one powder to the other (position of mixed layer 12). The intended deformation in the hot state could be optimized to be zero with minimal deviation from the design geometry, or a certain intended deformation can be generated to optimize contact pressure and wear.

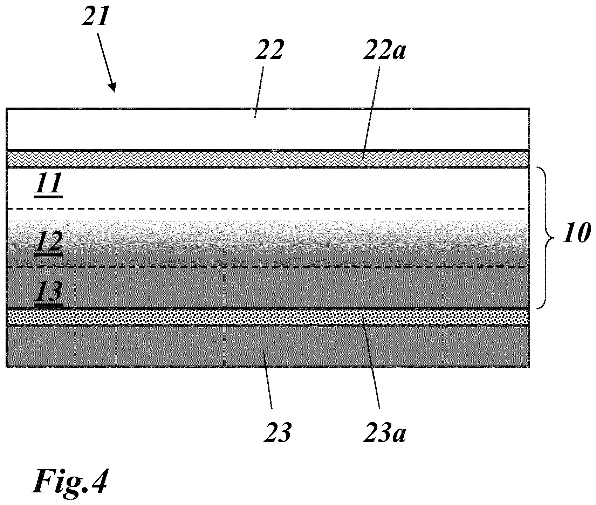

As shown in Fig. 4, a metal part as shown in Fig. 1 could also be used for welding parts of dissimilar material together in a welding component 21. By SLM an intermediate part (10 in Fig. 4) with a smooth and defined changeover from one to another material could be made. Afterwards only weldings with similar materials must be made, i.e. a separate metal part 22 of first metal may be welded to pure layer 11 of first metal of the metal part 10 with a welding seam 22a, and a separate metal part 23 of second metal may be welded to pure layer 13 of second metal of the metal part 10 with a welding seam 23a.

Also, 3 or more different metal materials could be used to establish two or more bimetal transitions in a stack, for example.

### LIST OF REFERENCE NUMERALS

- 10: metal part
- 11,13: pure layer
- 12: mixed layer
- 14: manufacturing arrangement
- 15: control
- 16,17: powder reservoir
- 18: mixer
- 19: SLM laser source
- 19a: laser beam
- 20: support
- 21: welded component
- 22,23: metal part
- 22a,23a: welding seam
- 24: powder layer
- 25: powder layer generating device

## Claims

1. Method for manufacturing a metal part (10) with bi-metallic characteristic in an additive manufacturing (AM) process, comprising the steps of:
a) providing a first powder of a metal with a first thermal expansion coefficient;
b) providing a second powder of a metal with a second thermal expansion coefficient different from said first thermal expansion coefficient;
c) manufacturing a first pure metal layer (13) by successively melting layers of said first powder alone;
d) manufacturing on said first pure metal layer (13) a mixed layer (12) by successively melting layers of a third powder being a mixture of said first and second powders, whereby the percentage of said first powder decreases from 100% to 0% with increasing thickness of said mixed layer (12), and whereby the percentage of said second powder increases at the same time from 0% to 100%; and
e) manufacturing a second pure metal layer (11) by successively melting layers of said second powder alone;
wherein the metal with the larger thermal expansion coefficient is used for a colder side of the metal part and the metal with the lower thermal expansion is used for a hotter side of the metal part,
wherein the intended deformation in a hot state of the metal part defines the change point from one powder to the other, and
wherein the intended deformation in the hot state is optimized to be zero with minimal deviation from the design geometry, or a certain intended deformation is generated to optimize contact pressure and wear.

2. Method as claimed in Claim 1, **characterized in that** said mixture of said first and second powders is produced by taking a first quantity of said first powder from a first powder reservoir (16) and a second quantity of said second powder from a second powder reservoir (17) and mixing said first and second quantities in a mixer (18), whereby said first and second quantities are chosen to generate a new powder layer (24) with a predetermined mixing ratio, and that said mixture of said first and second powders is used in step (d) to manufacture said mixed layer (12).

3. Method as claimed in Claim 2, **characterized in that** said mixture of said first and second powders is put as a powder layer (24) of the incomplete metal part (10) by means of a powder layer generating device (25).

4. Method as claimed in Claim 1, **characterized in that** said melting is done by using a selective laser melting (SLM) process.

## Patentansprüche

1. Verfahren zur Herstellung eines Metallteils (10) mit bimetallischen Eigenschaften in einem additiven Herstellungsprozess (AM), enthaltend die Schritte:
a) Bereitstellen eines ersten Pulvers aus einem Metall mit einem ersten Wärmeausdehnungskoeffizienten;
b) Bereitstellen eines zweiten Pulvers aus einem Metall mit einem zweiten Wärmeausdehnungskoeffizienten, der von dem ersten Wärmeausdehnungskoeffizienten verschieden ist;
c) Herstellen einer ersten reinen Metallschicht (13) durch sukzessives Schmelzen von Schichten nur des ersten Pulvers;
d) Herstellen, auf der ersten reinen Metallschicht (13), eine gemischte Schicht (12) durch sukzessives Schmelzen von Schichten eines dritten Pulvers, welches eine Mischung des ersten und des zweiten Pulvers ist, wobei der Prozentsatz des ersten Pulvers mit zunehmender Dicke der gemischten Schicht (12) von 100 % auf 0 % abnimmt und wobei der Prozentsatz des zweiten Pulvers gleichzeitig von 0 % auf 100 % zunimmt; und
e) Herstellen einer zweiten reinen Metallschicht (11) durch sukzessives Schmelzen von Schichten nur des zweiten Pulvers;
wobei das Metall mit dem größeren Wärmeausdehnungskoeffizienten für eine kältere Seite des Metallteils verwendet wird und das Metall mit dem niedrigeren Wärmeausdehnungskoeffizienten für eine heißere Seite des Metallteils verwendet wird,
wobei die beabsichtigte Verformung in einem heißen Zustand des Metallteils den Wechselpunkt von einem Pulver zu dem anderen definiert, und
wobei die beabsichtigte Verformung im heißen Zustand so optimiert wird, dass sie null wird, mit einer minimalen Abweichung von der Konstruktionsgeometrie, oder eine bestimmte beabsichtigte Verformung erzeugt wird, um Kontaktdruck und Verschleiß zu optimieren.

2. Verfahren nach Anspruch 1, **dadurch gekennzeichnet, dass** die Mischung des ersten und des zweiten Pulvers hergestellt wird, indem eine erste Menge des ersten Pulvers aus einem ersten Pulverreservoir (16) entnommen wird und eine zweite Menge des zweiten Pulvers aus einem zweiten Pulverreservoir (17), und die erste und die zweite Menge in einem Mischer (18) gemischt werden, wobei die erste und die zweite Menge so gewählt sind, dass eine neue Pulverschicht (24) mit einem vorbestimmten Mischungsverhältnis erzeugt wird, wobei die Mischung des ersten und des zweiten Pulvers in Schritt (d) verwendet wird, um die gemischte Schicht (12) herzustellen.

3. Verfahren nach Anspruch 2, **dadurch gekennzeichnet, dass** die Mischung des ersten und des zweiten Pulvers als eine Pulverschicht (24) des unvollständigen Metallteils (10) mittels einer Pulverschichterzeugungseinrichtung (25) gelegt wird.

4. Verfahren nach Anspruch 1, **dadurch gekennzeichnet, dass** das Schmelzen unter Verwendung eines selektiven Laserschmelzprozesses (SLM) erfolgt.

## Revendications

1. Procédé destiné à fabriquer une pièce métallique (10) présentant une caractéristique bimétallique selon un processus de fabrication additive (AM), comprenant les étapes suivantes :
a) fournir une première poudre d'un métal qui présente un premier coefficient de dilatation thermique ;
b) fournir une deuxième poudre d'un métal qui présente un second coefficient de dilatation thermique qui est différent dudit premier coefficient de dilatation thermique ;
c) fabriquer une première couche de métal pur (13) en faisant fondre successivement des couches de ladite première poudre seule ;
d) fabriquer sur ladite première couche de métal pur (13), une couche mélangée (12) en faisant fondre successivement des couches d'une troisième poudre qui est un mélange desdites première et deuxième poudres, grâce à quoi le pourcentage de ladite première poudre diminue de 100 % à 0 % alors qu'augmente l'épaisseur de ladite couche mélangée (12), et grâce à quoi le pourcentage de ladite deuxième poudre augmente en même temps de 0 % à 100 % ; et
e) fabriquer une seconde couche de métal pur (11) en faisant fondre successivement des couches de ladite deuxième poudre seule ;
où le métal qui présente le grand coefficient de dilatation thermique, est utilisé pour le côté plus froid de la pièce métallique, et le métal qui présente le faible coefficient de dilatation thermique, est utilisé pour le côté plus chaud de la pièce métallique,
où la déformation prévue dans un état chaud de la pièce métallique, définit le point de modification d'une poudre à l'autre, et
où la déformation prévue dans l'état chaud est optimisée pour être égale à zéro avec une déviation minimale de la géométrie de conception, ou une certaine déformation prévue est générée afin d'optimiser une pression de contact et une usure.

2. Procédé selon la revendication 1, **caractérisé en ce que** ledit mélange desdites première et deuxième poudres, est produit en prenant une première quantité de ladite première poudre à partir d'un premier réservoir de poudre (16), et une seconde quantité de ladite deuxième poudre à partir d'un second réservoir de poudre (17), et en mélangeant lesdites première et seconde quantités dans un mélangeur (18), grâce à quoi lesdites première et seconde quantités sont choisies pour générer une nouvelle couche de poudre (24) qui présente un rapport de mélange prédéterminé, et ce dit mélange desdites première et deuxième poudres est utilisé dans l'étape (d) visant à fabriquer ladite couche mélangée (12).

3. Procédé selon la revendication 2, **caractérisé en ce que** ledit mélange desdites première et deuxième poudres est placé en tant que couche de poudre (24) de la pièce métallique incomplète (10) au moyen d'un dispositif de génération de couche de poudre (25).

4. Procédé selon la revendication 1, **caractérisé en ce que** ladite fusion est réalisée en faisant appel à un processus de fusion sélective par laser (SLM).
